# EUROPÄISCHE PATENTSCHRIFT

(11) **EP 2 689 117 B1**
(45) Veröffentlichungstag und Bekanntmachung des Hinweises auf die Patenterteilung: **22.03.2017**
(21) Anmeldenummer: 12701734.1
(22) Anmeldetag: 25.01.2012
(51) Int. Cl.: F01N 3/20

(54) **FUNKTIONSEINHEIT FÜR EINEN REDUKTIONSMITTEL-VORRATSTANK SOWIE REDUKTIONSMITTEL-VORRATSTANK**
FUNCTIONAL UNIT FOR A REDUCING AGENT STORAGE TANK AND REDUCING AGENT STORAGE TANK
UNITÉ FONCTIONNELLE POUR UN RÉSERVOIR D'AGENT RÉDUCTEUR AINSI QUE RÉSERVOIR D'AGENT RÉDUCTEUR

(30) Priorität: 25.03.2011 DE 102011006105
(43) Veröffentlichungstag der Anmeldung: 29.01.2014
(73) Patentinhaber: Robert Bosch GmbH, 70442 Stuttgart (DE)
(72) Erfinder: HAEBERER, Rainer, 75015 Bretten (DE); WELTING, Dirk, 71287 Weissach (DE)
(86) Internationale Anmeldenummer: PCT/EP2012/051116
(87) Internationale Veröffentlichungsnummer: WO 2012/130493

(56) Entgegenhaltungen:
- EP-A1- 2 577 012
- WO-A1-2008/138960
- DE-A1-102005 036 430
- DE-A1-102009 041 938

## Beschreibung

Die Erfindung betrifft eine Funktionseinheit für einen Reduktionsmittel-Vorratstank mit den Merkmalen des Oberbegriffs des Anspruchs 1. Ferner betrifft die Erfindung einen Vorratstank für ein Reduktionsmittel, insbesondere eine wässrige Harnstofflösung zur Nachbehandlung von Abgasen aus einem Verbrennungsmotor, mit einer solchen Funktionseinheit.

### Stand der Technik

Aufgrund stetig steigender gesetzlicher Anforderungen an die Emissionswerte von Verbrennungsmotoren werden zur Einhaltung der vorgegebenen Grenzwerte die Abgase aus Verbrennungsmotoren einer Nachbehandlung unterzogen. Zur Reduzierung des Stickoxidausstosses, insbesondere bei Dieselmotoren, werden Reduktionskatalysatoren eingesetzt, mittels derer die Stickoxid-Emissionen (NO_{X}) deutlich abgesenkt werden können. Bevor die Abgase in den Katalysator gelangen, wird ihnen ein Reduktionsmittel zugeführt, wie beispielsweise eine wässrige Harnstofflösung, welche die Bildung von Ammoniak bewirkt, das wiederum mit den Stickoxiden im nachgeschalteten Katalysator zu harmlosem Stickstoff und Wasser reagiert. Die Zufuhr der wässrigen Harnstofflösung erfolgt über Dosiersysteme, die in der Regel einen Vorratstank zur Bevorratung des Reduktionsmittels, und ein Dosiermodul, wie beispielsweise eine Dosierpumpe oder ein Dosierventil, umfassen. Ferner bedarf es eines Fördermoduls, um das im Vorratstank bevorratete Reduktionsmittel dem Dosiermodul zuzuführen.

Der zur Bevorratung des Reduktionsmittels vorgesehene Vorratstank ist in der Regel derart am Fahrzeug angeordnet, dass das hierin enthaltene Reduktionsmittel den Außentemperaturen ausgesetzt ist. Da die wässrige Harnstofflösung bei Temperaturen unter -11°C gefriert, ist der Vorratstank mit einem Heizelement ausgestattet, das ein Einfrieren verhindert bzw. ein Auftauen von bereits gefrorenem Reduktionsmittel bewirken soll. Bei dem Heizelement kann es sich beispielsweise um eine elektrische Heizung handeln. Besonders vorteilhaft lassen sich bei hohen Temperaturen selbst abregelnde PTC-Heizelemente (Positive Temperature Coefficient), die in einen flächigen Trägerkörper integriert sind, als Heizelemente einsetzen. Unabhängig von der konkreten Ausführung des Heizelements wird dieses bevorzugt im Bodenbereich eines in den Tank eingesetzten topfförmigen Behälters angeordnet, der sicherstellen soll, dass auch bei geringem Füllstand das Heizelement von einer ausreichenden Menge Reduktionsmittel umgeben ist.

Ein Vorratstank der vorstehend genannten Art geht beispielsweise aus der Offenlegungsschrift DE 10 2006 027 487 A1 hervor. Bei diesem Vorratstank ist die Heizvorrichtung in einen Innenbehälter eingesetzt, welcher Bestandteil einer Funktionseinheit ist, die ferner eine Pumpe, ein Druckregelventil und eine Saugleitung umfasst. Die Funktionseinheit ist vorzugsweise über eine Öffnung in den Vorratstank einsetzbar, so dass sie die Öffnung deckelartig abdichtet.

Aus der Offenlegungsschrift DE 10 2009 041 938 A1 geht ferner ein Tank zur Bevorratung eines fluiden Reduktionsmittels mit einer Heizeinrichtung zum Aufheizen des Reduktionsmittels hervor.

Eine beheizbare Fluidentnahmevorrichtung ist zudem aus der WO 2011/151229 A1 bekannt.

Der Erfindung liegt die Aufgabe zugrunde, eine Funktionseinheit mit einer Heizvorrichtung für einen Reduktionsmittel-Vorratstank anzugeben, die einen hohen Wirkungsgrad aufweist und hinsichtlich ihrer Robustheit verbessert ist. Insbesondere soll die Funktionseinheit gegenüber Eisdruck weitgehend unempfindlich sein.

Die Aufgabe wird gelöst durch eine Funktionseinheit für einen Reduktionsmittel-Vorratstank mit den Merkmalen des Anspruchs 1. Vorteilhafte Weiterbildungen der Erfindung sind in den Unteransprüchen angegeben.

### Offenbarung der Erfindung

Die vorgeschlagene Funktionseinheit für einen Reduktionsmittel-Vorratstank, wobei das Reduktionsmittel vorzugsweise eine wässrige Harnstofflösung zur Nachbehandlung von Abgasen aus einem Verbrennungsmotor ist, umfasst eine Heizvorrichtung sowie einen Wärmeverteiler mit wenigstens einem Hohlraum zur Aufnahme wenigstens eines Heizelementes der Heizvorrichtung und/oder wenigstens einer weiteren Komponente, wie beispielsweise eine Pumpe und/oder einen Füllstandssensor. Die Funktionseinheit ist vorzugsweise bodenseitig an einem Reduktionsmittel-Vorratstank angeordnet und bildet einen Sumpf aus. Da sich im Bereich des Sumpfes das Reduktionsmittel sammelt, ist auch bei niedrigem Reduktionsmittel-Füllstand ein Schutz gegen Gefrieren des Reduktionsmittels gewährleistet. Der Füllstandssensor ermöglicht die Erfassung des jeweils aktuellen Füllstandes. Das wenigstens eine Heizelement bewirkt in Verbindung mit dem Wärmeverteiler einen hohen Wirkungsgrad der Heizvorrichtung, so dass ein Gefrieren des sich im Sumpf befindlichen Reduktionsmittels wirksam verhindert wird. Indem das wenigstens eine Heizelement und/oder wenigstens eine weitere Komponente in einem Hohlraum des Wärmeverteilers aufgenommen ist bzw. sind, wird dieses bzw. werden diese vor Schäden durch mechanische Einwirkungen von außen geschützt. Zusätzlich bewirkt die Ausbildung wenigstens eines Hohlraums eine Vergrößerung der Oberfläche des Wärmeverteilers, welcher den Hohlraum zumindest teilweise umschließt. Dies wirkt sich nicht nur günstig auf die Wärmeverteilung und damit den Wirkungsgrad der Heizvorrichtung aus, sondern erhöht zudem die Formsteifigkeit des Wärmeverteilers.

Vorteilhafterweise ist der Wärmeverteiler aus einem metallischen Werkstoff, vorzugsweise Aluminium, hergestellt und mit Kunststoff umspritzt. Aluminium ist ein guter Wärmeleiter und zudem sehr leicht. Die Umspritzung mit Kunststoff schützt den Metall- bzw. Aluminiumkörper vor Korrosion.

Gemäß einer bevorzugten Ausführungsform der Erfindung ist der Wärmeverteiler im Wesentlichen ringförmig ausgebildet. Die Ringform des Wärmeverteilers umgibt einen zylinderförmigen Hohlraum, der bei Bedarf unterteilt sein kann. Die Ringform zeichnet sich zudem durch eine hohe Formsteifigkeit aus. Erfindungsgemäß besitzt der Wärmeverteiler einen Innenring und einen Außenring, welche über radial verlaufende Stege verbunden sind, so dass bogenförmig verlaufende Zwischenräume zur Aufnahme des Reduktionsmittels ausgebildet werden. Die Ausbildung mehrere Ringe vergrößert die Oberfläche des Wärmeverteilers und verbessert somit wiederum die Wärmeverteilung. Die zwischen den Ringen angeordneten Stege erhöhen die Formsteifigkeit des Wärmeleiters. Dadurch kann die Robustheit der Funktionseinheit weiter gesteigert werden. Die bogenförmig verlaufenden Zwischenräume dienen als Flüssigkeitsfalle, so dass die Wärmeabgabe verbessert wird, da der Wärmeverteiler der Heizvorrichtung stets von Reduktionsmittel umgeben ist.

Ferner erfindungsgemäß ist an den Außenring ein Kragen angeformt, mit welchem die Funktionseinheit an einen bodenseitig offenen Behälter eines Reduktionsmittel-Vorratstanks ansetzbar ist, so dass die Funktionseinheit einen Sumpf als schwappsichere Stelle des Behälters ausbildet. Ein separater Sumpf zur Aufnahme der Funktionseinheit ist somit entbehrlich. Die Verbindung von Funktionseinheit und Behälter erfolgt vorzugsweise mittels Verschweißen.

Weiterhin wird vorgeschlagen, dass der vom Wärmeverteiler umschlossene Hohlraum durch wenigstens eine Zwischenwand unterteilt wird, so dass vorzugsweise mehrere sektorförmige Hohlräume ausgebildet werden. Die weiteren Komponenten der Funktionseinheit können dann auf die mehreren Hohlräume verteilt werden, so dass der Schutz der Komponenten verbessert wird. Zudem tragen Zwischenwände zur Erhöhung der Formsteifigkeit der Funktionseinheit bei.

Gemäß einer weiteren bevorzugten Ausführungsform der Erfindung mündet in einen vom Wärmeverteiler umschlossenen Hohlraum oder Zwischenraum eine Entnahmeleitung. Der Hohlraum oder Zwischenraum ist dabei über eine Öffnung mit dem Innenraum des Behälters verbindbar. Die Anordnung der Mündung der Entnahmeleitung im Bereich des Wärmeverteilers stellt sicher, dass immer ausreichend flüssiges Reduktionsmittel zur Entnahme zur Verfügung steht.

Des Weiteren wird vorgeschlagen, dass die Öffnung, über welche der Hohlraum oder der Zwischenraum mit dem Innenraum des Behälters verbindbar ist, von einem Filterelement abgedeckt ist. Das Filterelement verhindert, dass dem Vorrats
tank durch Partikel verunreinigtes Reduktionsmittel entnommen wird. Das Filterelement ist vorzugsweise oberhalb der Heizungsvorrichtung angeordnet und mittels Ultraschallschweißens am Wärmeverteiler befestigt.

Vorteilhafterweise ist das Heizelement ein elektrisches Heizelement, insbesondere ein PTC-Element, das vorzugsweise in den Wärmeverteiler, beispielsweise durch Einpressen und/oder Umspritzen, integriert ist. Derartig integrierte Heizelemente erweisen sich als äußerst robust.

Ferner wird zur Lösung der eingangs genannten Aufgabe ein Reduktionsmittel-Vorratstank mit einer erfindungsgemäßen Funktionseinheit vorgeschlagen. Die Funktionseinheit ist dabei an einen bodenseitig offenen Behälter angesetzt und vorzugsweise mit diesem verschweißt. Der Behälter kann in bestimmten Bereichen weich bzw. elastisch ausgebildet sein, um beispielsweise bei Eisdruck eine Verformung zuzulassen. Dadurch kann die Funktionseinheit gezielt entlastet werden, da die Verformung des Behälters einen Druckabbau bewirkt.

Ausführungsbeispiele der vorliegenden Erfindung werden nachfolgend anhand der Figuren näher beschrieben. Diese zeigen:
- Fig. 1: einen schematischen Vertikalschnitt durch einen Reduktionsmittel-Vorratstank mit einer nicht erfindungsgemäßen Funktionseinheit,
- Fig. 2: einen Vertikalschnitt durch eine nicht erfindungsgemäße Funktionseinheit der Fig. 1,
- Fig. 3: einen Horizontalschnitt durch die nicht erfindungsgemäße Funktionseinheit der Fig. 1,
- Fig. 4: einen Vertikalschnitt durch eine erfindungsgemäße Funktionseinheit,
- Fig. 5: einen Horizontalschnitt durch die Funktionseinheit der Fig. 4,
- Fig. 6a: einen Horizontalschnitt und
- Fig. 6b: einen Vertikalschnitt durch den Wärmeverteiler der Funktionseinheit der Fig. 4 und 5.

### Ausführliche Beschreibung der Figuren

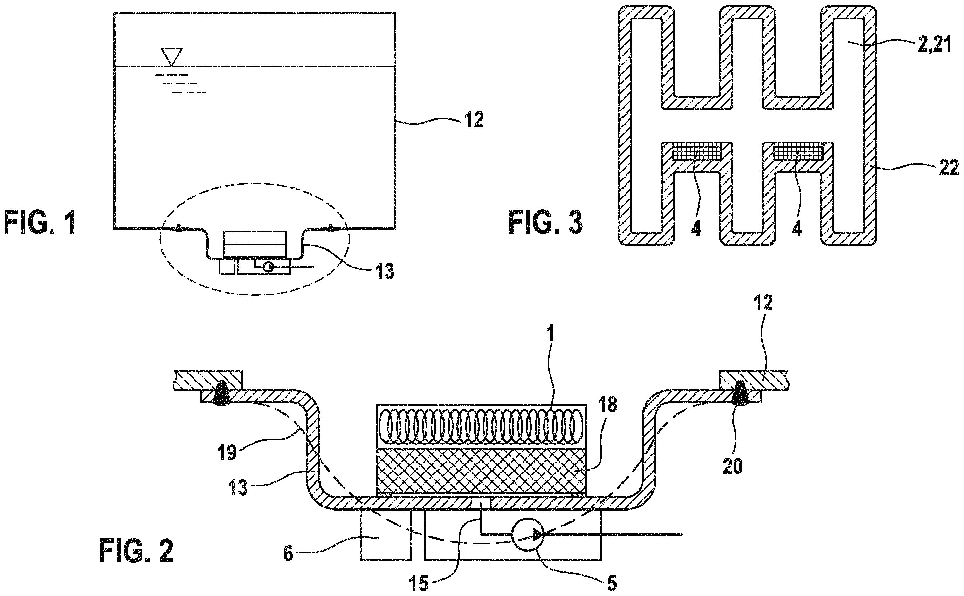

Eine nicht erfindungsgemäße Funktionseinheit ist den Fig. 1 bis 3 zu entnehmen. Gemäß Fig. 1 ist die Funktionseinheit bodenseitig an einen Behälter 12 eines Reduktionsmittel-Vorratstanks angesetzt und bildet somit einen Sumpf 13 aus.

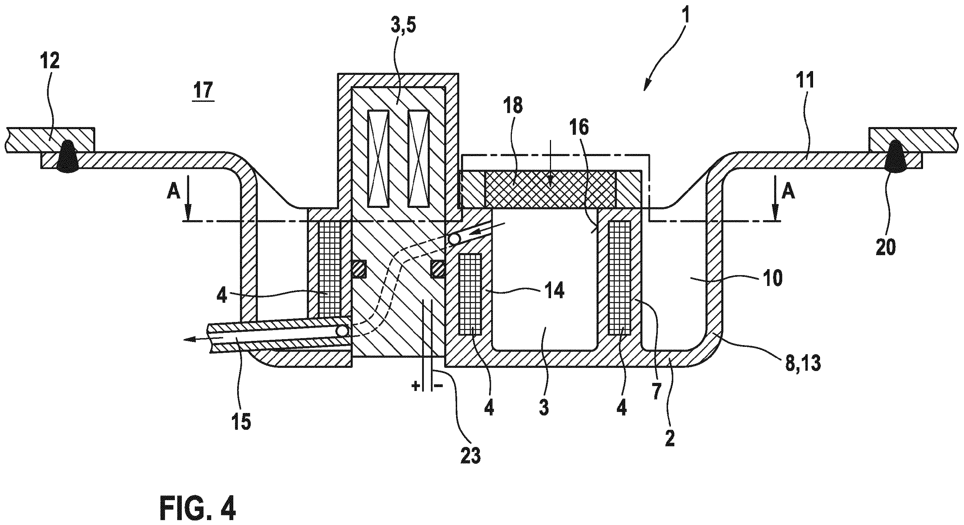

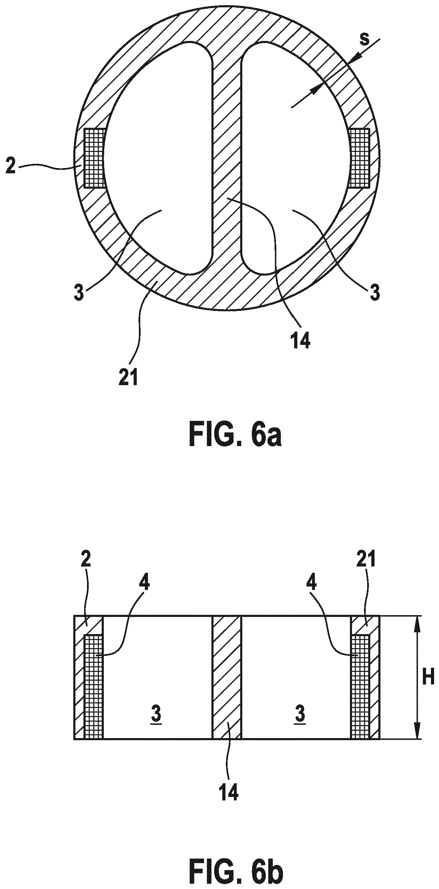

Gemäß Fig. 2 umfasst die Funktionseinheit eine in den Sumpf 13 eingesetzte Heizvorrichtung 1, die oberhalb eines Filterelementes 18 angeordnet ist. Das Filterelement 18 deckt die Mündung einer Entnahmeleitung 15 ab. Des Weiteren umfasst die Funktionseinheit eine Pumpe 5 und einen Füllstandssensor 6 als weitere Komponenten, die unterhalb des Sumpfes 13 angeordnet sind. Der Sumpf 13 ist über Schweißnähte 20 mit dem Behälter 12 des Reduktionsmittel-Vorratstanks verbunden. Aufgabe der Heizvorrichtung 1 ist es, ein Gefrieren der als Reduktionsmittel eingesetzten wässrigen Harnstofflösung zumindest im Bereich der Entnahmeleitung 15 zu verhindern. Um einen möglichst großen Bereich eisfrei zu halten, weist die Heizvorrichtung 1 einen Aluminiumkörper 21 als Wärmeverteiler 2 auf, der zur Vergrößerung seiner Oberfläche die Form eines Doppel-E mit weit auskragenden Fingern besitzt. Als Heizelemente 4 sind mehrere PTC-Elemente in einen Hohlraum 3 des Wärmeverteilers 2 eingesetzt. Um den Aluminiumkörper 21 des Wärmeverteilers 2 vor Korrosion zu schützen, weist dieser zudem eine Kunststoffummantelung 22 auf (siehe Fig. 3). Bei der Ausführungsform gemäß der Fig. 1 bis 3 kann eine Belastung, beispielsweise aufgrund von Eisdruck, zu einer Verformung 19 der Funktionseinheit führen. Eine solche Verformung könnte zudem zu einer stärkeren Belastung der Schweißnähte 20 führen. In den Fig. 4 bis 6a und b wird daher eine Weiterbildung einer erfindungsgemäßen Funktionseinheit beschrieben, welche sich durch eine besonders hohe Robustheit auszeichnet.

Fig. 4 zeigt die Weiterbildung in einem Vertikalschnitt einer erfindungssgemäßen Funktionseinheit. Die Funktionseinheit ist wiederum an einen Behälter 12 eines Reduktionsmittel-Vorratstanks angesetzt und bildet einen Sumpf 13 aus. Die Funktionseinheit umfasst eine Heizvorrichtung 1 mit einem Wärmeverteiler 2, der wenigstens einen Hohlraum 3 zur Aufnahme einer weiteren Komponente der Funktionseinheit umschließt. Hierzu ist der Wärmeverteiler 2 im Wesentlichen ringförmig ausgebildet. Er umfasst einen Innenring 7, der zwei sektorförmige und durch eine Zwischenwand 14 voneinander getrennte Hohlräume 3 umschließt, sowie einen Außenring 8 mit einem angeformten Kragen 11. Der Innenring 7 und der Außenring 8 sind über vier radial verlaufende Stege 9 miteinander verbunden, so dass bogenförmig verlaufende Zwischenräume 10 ausgebildet werden, welche als Flüssigkeitsfalle dienen. Zur Erhöhung der Formsteifigkeit können mehr als vier Stege 9 angeordnet werden. Alternativ kann die Anzahl der Stege auch reduziert werden. Der am Außenring 8 angeformte Kragen 11 dient der Befestigung der Funktionseinheit am Behälter 12. Die Befestigung erfolgt vorliegend über eine umlaufende Schweißnaht 20, die zugleich eine Abdichtung bewirkt.

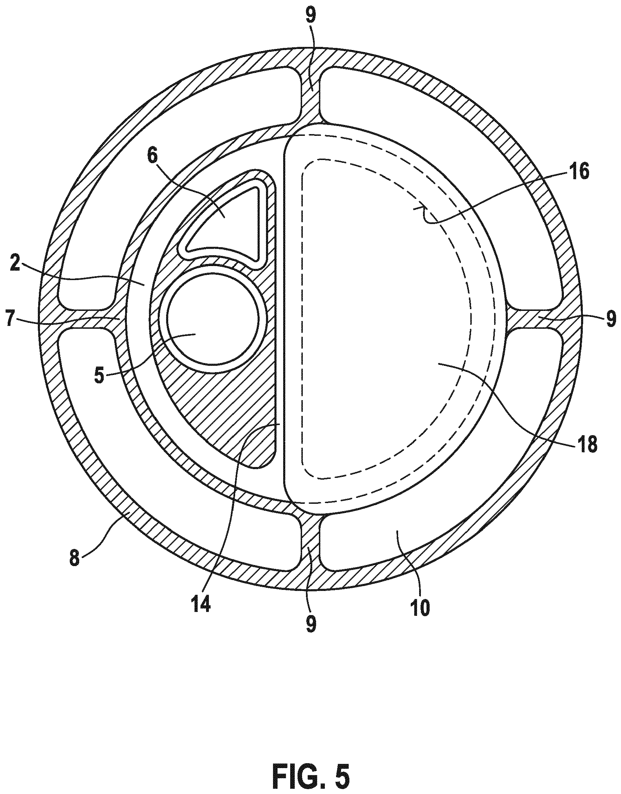

Im ersten sektorförmigen und vom Innenring 7 des Wärmeverteilers 2 umschlossenen Hohlraum 3 (siehe Fig. 4 und Fig. 5, linke Seite) sind eine Pumpe 5 und ein Füllstandssensor 6, vorliegend ein Ultraschallsensor, aufgenommen. Der Hohlraum 3 ist zum Innenraum 17 des Behälters 12 hin geschlossen, so dass weder die Pumpe 5 noch der Füllstandssensor 6 in Kontakt mit dem Reduktionsmittel gelangen. Die zum Betrieb der Pumpe 5 und des Füllstandssensors 6 erforderlichen elektrischen Anschlüsse 23 werden von unten in den Hohlraum 3 eingeführt. Der zweite sektorförmige Hohlraum 3 weist eine Öffnung 16 auf, mit welcher er in Verbindung mit dem Innenraum 17 des Behälters 12 steht. In den Hohlraum 3 mündet eine Entnahmeleitung 15, so dass bei erfolgter Entnahme frisches Reduktionsmittel aus dem Behälter 12 in den Hohlraum 3 nachströmen kann. Um eine Verschmutzung des zu entnehmenden Reduktionsmittels mit Partikeln zu verhindern, ist die Öffnung 16 des Hohlraums 3 von einem Filterelement 18 abgedeckt, das vorliegend mittels Ultraschallschweißens am Wärmeverteiler 2 befestigt ist.

Die ringförmige Ausführung des Wärmeverteilers 2 gewährt eine hohe Formsteifigkeit, die dadurch noch erhöht wird, dass der Wärmeverteiler 2 als Doppelring, umfassend einen Innenring 7 und einen Außenring 8, ausgebildet ist. Die zwischen dem Innenring 7 und dem Außenring 8 angeordneten radial verlaufenden Stege 9 sowie die zur Unterteilung des Hohlraums 3 eingesetzte Zwischenwand 14 bewirken eine weitere Erhöhung der Formsteifigkeit. Zudem wird die Oberfläche des Wärmeverteilers 2 vergrößert, was sich günstig auf die Wärmeverteilung auswirkt. Die Ausbildung von Hohlräumen 3 ermöglicht eine geschützte Anordnung verformungssensibler Komponenten, wie beispielsweise der Pumpe 5 und des Füllstandssensors 6 einschließlich ihrer elektrischen Anschlüsse 23.

Der dargestellte Wärmeverteiler 2 ist aus Aluminium gefertigt und zum Schutz vor Korrosion mit Kunststoff umspritzt (siehe Fig. 6a und Fig. 6b, wobei die Umspritzung mit Kunststoff nicht dargestellt ist). In den Aluminiumkörper 21 des Wärmeverteilers 2 sind PTC-Elemente als Heizelemente 4 eingesetzt, so dass die (nicht dargestellte) Kunststoffumspritzung auch die Heizelemente 4 schützt. Der Wärmeverteiler 2 besitzt eine Höhe H, die vorliegend etwa 40 mm beträgt. Die Stärke s des Innenrings 7 beträgt vorliegend etwa 10 mm.

## Patentansprüche

1. Funktionseinheit für einen Reduktionsmittel-Vorratstank, wobei das Reduktionsmittel vorzugsweise eine wässrige Harnstofflösung zur Nachbehandlung von Abgasen aus einem Verbrennungsmotor ist, umfassend eine Heizvorrichtung (1) sowie einen Wärmeverteiler (2) mit wenigstens einem Hohlraum (3) zur Aufnahme wenigstens eines Heizelementes (4) der Heizvorrichtung (1) und/oder wenigstens einer weiteren Komponente, wie beispielsweise eine Pumpe (5) und/oder ein Füllstandsensor (6), wobei der Wärmeverteiler (2) einen Innenring (7) und einen Außenring (8) besitzt, welche über radial verlaufende Stege (9) verbunden sind, so dass bogenförmig verlaufende Zwischenräume (10) zur Aufnahme des Reduktionsmittels ausgebildet werden,
**dadurch gekennzeichnet, dass** an den Außenring (8) ein Kragen (11) angeformt ist, mit welchem die Funktionseinheit an einen bodenseitig offenen Behälter (12) eines Reduktionsmittel-Vorratstanks ansetzbar ist, so dass die Funktionseinheit einen Sumpf (13) als schwappsichere Stelle des Behälters (12) ausbildet.

2. Funktionseinheit nach Anspruch 1,
**dadurch gekennzeichnet, dass** der Wärmeverteiler (2) aus einem metallischen Werkstoff, vorzugsweise Aluminium, hergestellt und mit Kunststoff umspritzt ist.

3. Funktionseinheit nach Anspruch 1 oder 2,
**dadurch gekennzeichnet, dass** der Wärmeverteiler (2) im Wesentlichen ringförmig ausgebildet ist.

4. Funktionseinheit nach einem der vorhergehenden Ansprüche,
**dadurch gekennzeichnet, dass** der vom Wärmeverteiler (2) umschlossene Hohlraum (3) durch wenigstens eine Zwischenwand (14) unterteilt wird, so dass vorzugsweise mehrere sektorförmige Hohlräume (3) ausgebildet werden.

5. Funktionseinheit nach einem der vorhergehenden Ansprüche,
**dadurch gekennzeichnet, dass** in einen vom Wärmeverteiler (2) umschlossener Hohlraum (3) oder Zwischenraum (10) eine Entnahmeleitung (15) mündet, wobei der Hohlraum (3) oder Zwischenraum (10) über eine Öffnung (16) mit dem Innenraum (17) des Behälters (12) verbindbar ist.

6. Funktionseinheit nach Anspruch 5,
**dadurch gekennzeichnet, dass** die Öffnung (16), über welche der Hohlraum (3) oder der Zwischenraum (10) mit dem Innenraum (17) des Behälters (12) verbindbar ist, von einem Filterelement (18) abgedeckt ist.

7. Funktionseinheit nach einem der vorhergehenden Ansprüche,
**dadurch gekennzeichnet, dass** das Heizelement (4) ein elektrisches Heizelement, insbesondere ein PTC-Element, ist, das vorzugsweise in den Wärmeverteiler (2), beispielsweise durch Einpressen und/oder Umspritzen, integriert ist.

8. Reduktionsmittel-Vorratstank mit einer Funktionseinheit nach einem der vorhergehenden Ansprüche, wobei die Funktionseinheit an einen bodenseitig offenen Behälter (12) angesetzt und vorzugsweise mit diesem verschweißt ist.

## Claims

1. Functional unit for a reducing agent storage tank, wherein the reducing agent is preferably an aqueous urea solution for the aftertreatment of exhaust gases from an internal combustion engine, comprising a heating device (1) and a heat distributor (2) with at least one cavity (3) for accommodating at least one heating element (4) of the heating device (1) and/or for accommodating at least one further component, such as for example a pump (5) and/or a fill level sensor (6), wherein the heat distributor (2) has an inner ring (7) and an outer ring (8) which are connected by way of radially running webs (9), such that intermediate spaces (10) which run in arcuate fashion and which serve for accommodating the reducing agent are formed,
**characterized in that**, on the outer ring (8), there is integrally formed a collar (11) by way of which the functional unit can be mounted onto a tank (12), which is open at a base side, of a reducing agent storage tank, such that the functional unit forms a sump (13) as a slosh-proof point of the container (12).

2. Functional unit according to Claim 1,
**characterized in that** the heat distributor (2) is produced from a metallic material, preferably aluminium, and is encapsulated with plastic by injection moulding.

3. Functional unit according to Claim 1 or 2,
**characterized in that** the heat distributor (2) is of substantially ring-shaped form.

4. Functional unit according to one of the preceding claims, **characterized in that** the cavity (3) enclosed by the heat distributor (2) is divided by at least one intermediate wall (14) such that, preferably, multiple sector-shaped cavities (3) are formed.

5. Functional unit according to one of the preceding claims,
**characterized in that** an extraction line (15) opens into a cavity (3), or intermediate space (10), enclosed by the heat distributor (2), wherein the cavity (3) or intermediate space (10) is connectable to the interior space (17) of the container (12) via an opening (16).

6. Functional unit according to Claim 5,
**characterized in that** the opening (16) via which the cavity (3) or the intermediate space (10) is connectable to the interior space (17) of the container (12) is covered by a filter element (18).

7. Functional unit according to one of the preceding claims, **characterized in that** the heating element (4) is an electric heating element, in particular a PTC element, which is preferably integrated into the heat distributor (2), for example by being pressed in and/or encapsulated by injection moulding.

8. Reducing agent storage tank having a functional unit according to one of the preceding claims, wherein the functional unit is mounted onto, and preferably welded to, a container (12) which is open at a base side.

## Revendications

1. Unité fonctionnelle pour un réservoir d'agent réducteur, l'agent réducteur étant de préférence une solution d'urée aqueuse pour le post-traitement de gaz d'échappement provenant d'un moteur à combustion interne, comprenant un dispositif de chauffage (1) ainsi qu'un dissipateur de chaleur (2) avec au moins une cavité (3) pour recevoir au moins un élément chauffant (4) du dispositif de chauffage (1) et/ou au moins un composant supplémentaire, tel que par exemple une pompe (5) et/ou un capteur de niveau (6), le dissipateur de chaleur (2) possédant une bague interne (7) et une bague externe (8) qui sont reliées par le biais de nervures (9) s'étendant radialement, de telle sorte que des espaces intermédiaires (10) s'étendant sous forme courbe soient réalisés pour recevoir l'agent réducteur,
**caractérisée en ce qu'**un collet (11) est façonné au niveau de la bague externe (8), avec lequel l'unité fonctionnelle peut être placée sur un récipient (12), ouvert du côté du fond, d'un réservoir d'agent réducteur, de telle sorte que l'unité fonctionnelle constitue un puisard (13) en tant qu'emplacement du récipient (12) protégé contre les débordements.

2. Unité fonctionnelle selon la revendication 1, **caractérisée en ce que** le dissipateur de chaleur (2) se compose d'un matériau métallique, de préférence d'aluminium, et est surmoulé avec du plastique.

3. Unité fonctionnelle selon la revendication 1 ou 2,
**caractérisée en ce que** le dissipateur de chaleur (2) est réalisé essentiellement sous forme annulaire.

4. Unité fonctionnelle selon l'une quelconque des revendications précédentes,
**caractérisée en ce que** la cavité (3) entourée par le dissipateur de chaleur (2) est divisée par au moins une paroi intermédiaire (14) de telle sorte que de préférence plusieurs cavités en forme de secteurs (3) soient réalisées.

5. Unité fonctionnelle selon l'une quelconque des revendications précédentes, **caractérisée en ce que** dans une cavité (3) ou un espace intermédiaire (10) entouré(e) par le dissipateur de chaleur (2) débouche une conduite de prélèvement (15), la cavité (3) ou l'espace intermédiaire (10) pouvant être relié(e) par le biais d'une ouverture (16) à l'espace interne (17) du récipient (12).

6. Unité fonctionnelle selon la revendication 5,
**caractérisée en ce que** l'ouverture (16) par le biais de laquelle la cavité (3) ou l'espace intermédiaire (10) peut être connecté(e) à l'espace interne (17) du récipient (12), est recouverte par un élément de filtre (18).

7. Unité fonctionnelle selon l'une quelconque des revendications précédentes,
**caractérisée en ce que** l'élément chauffant (4) est un élément chauffant électrique, en particulier un élément à CTP, qui est intégré de préférence dans le dissipateur de chaleur (2), par exemple par pressage et/ou surmoulage.

8. Réservoir d'agent réducteur comprenant une unité fonctionnelle selon l'une quelconque des revendications précédentes, dans lequel l'unité fonctionnelle est placée sur un récipient (12) ouvert du côté du fond et est de préférence soudée à celui-ci.
